(19) Europäisches Patentamt
European Patent Office
Office européen des brevets

(11) **EP 4 317 374 A1**

(12) **EUROPEAN PATENT APPLICATION**
published in accordance with Art. 153(4) EPC

(43) Date of publication:
**07.02.2024  Bulletin 2024/06**

(21) Application number: **22780742.7**

(22) Date of filing: **28.03.2022**

(51) International Patent Classification (IPC):
**C10M 169/02** (2006.01)     **C10N 10/04** (2006.01)
**C10N 30/00** (2006.01)     **C10N 30/06** (2006.01)
**C10N 30/08** (2006.01)     **C10N 30/12** (2006.01)
**C10N 40/02** (2006.01)     **C10N 50/10** (2006.01)
**F16C 19/18** (2006.01)     **F16C 33/78** (2006.01)
**C10M 105/32** (2006.01)     **C10M 107/02** (2006.01)
**C10M 107/34** (2006.01)     **C10M 115/08** (2006.01)
**C10M 117/00** (2006.01)     **C10M 133/12** (2006.01)
**F16J 15/3204** (2016.01)     **F16J 15/3232** (2016.01)
**F16J 15/324** (2016.01)     **B60B 35/14** (2006.01)
**B60B 35/18** (2006.01)

(52) Cooperative Patent Classification (CPC):
**B60B 35/14; B60B 35/18; C10M 105/32;
C10M 107/02; C10M 107/34; C10M 115/08;
C10M 117/00; C10M 133/12; C10M 169/02;
F16C 19/18; F16C 33/78; F16J 15/3204;
F16J 15/3232; F16J 15/324;** C10N 2010/04;

(Cont.)

(86) International application number:
**PCT/JP2022/014996**

(87) International publication number:
**WO 2022/210531 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.03.2021   JP 2021058898
30.03.2021   JP 2021058899
30.03.2021   JP 2021058900**

(71) Applicant: **NTN Corporation
Osaka-shi, Osaka 550-0003 (JP)**

(72) Inventors:
• **KAWAMURA Takayuki**
  **Kuwana-shi, Mie 511-0867 (JP)**
• **SEKIYA Toru**
  **Kuwana-shi, Mie 511-0867 (JP)**
• **KONDOU Ryouta**
  **Kuwana-shi, Mie 511-0867 (JP)**
• **GOKI Miwa**
  **Kuwana-shi, Mie 511-0867 (JP)**

(74) Representative: **Marks & Clerk LLP
15 Fetter Lane
London EC4A 1BW (GB)**

(54) **SEALED ROLLING BEARING**

(57)     To provide a sealed rolling bearing that is capable of achieving both of low torque performance and high sealing performance. A hub bearing 1 has a seal member 13 that seals a bearing space 9 and is fixed to a fixed side member 12 to be in sliding contact with a rotating side member 15. The seal member 13 has a seal lip that is in sliding contact with the rotating side member 15. Grease is applied to at least one of a sliding contact surface of the seal lip and a sliding contact surface of the rotating side member 15 with which the seal lip is in sliding contact. The grease contains a base oil and a thickener. The kinematic viscosity at 40 °C of the base oil is 6-45 mm$^2$/s. The worked penetration of the grease measured based on JIS K 2220 is 220-320.

EP 4 317 374 A1

Fig.1

(52) Cooperative Patent Classification (CPC): (Cont.)
C10N 2030/00; C10N 2030/06; C10N 2030/08;
C10N 2030/12; C10N 2040/02; C10N 2050/10

**Description**

TECHNICAL FIELD

The present invention relates to a sealed rolling bearing having a seal member, in particular relates to a sealed rolling bearing such as a hub bearing that supports an axle.

BACKGROUND ART

Generally, a grease composition for lubrication is sealed in a rolling bearing. The bearing with the grease composition sealed has long lifetime and is low in cost, and an external lubrication unit is not necessary. Thus, the bearing with the grease composition sealed is often used in a general use for automobiles and industrial devices. In particular, in a case in which a high sealing performance is required, a contact-type sealed rolling bearing is employed that causes a seal lip of a seal member to come into contact with a sliding contact surface of a mating material such as a raceway ring, so as to seal a bearing space.

For example, Patent Document 1 discloses a hub unit bearing as a sealed rolling bearing, in which a grease composition having a specified composition is sealed. The grease composition contains a base oil, a thickener, three kinds of antirust agents, and a wear preventive agent. Thus, the grease composition has superior water resistance.

Here, a leakage of grease from a bearing might contaminate an external mechanical component. Further, invasion of foreign matters such as water from an outside might remarkably deteriorate durability (wear resistance or bearing lifetime) of the bearing. Thus, it is important to secure the sealing performance of the sealed rolling bearing. Further, low torque is also required for sliding of a seal lip from a viewpoint of lower energy consumption or resource saving.

A technique has been conventionally known that applies grease to a seal lip or a mating material thereof in order to suppress sliding resistance of the seal lip and to secure the sealing performance of the seal lip. For example, Patent Document 2 discloses a rolling bearing in which grease is applied in advance to a portion of one surface of a distal end portion of a seal lip that comes into sliding contact with a surface of a hub ring in use. Further, Patent Document 3 discloses a rolling bearing in which grease is applied in advance to a surface of a mating material with which a seal lip comes into sliding contact.

PRIOR ART DOCUMENTS

PATENT DOCUMENTS

Patent Document 1: JP 5110843 B
Patent Document 2: JP 4475055 B
Patent Document 3: JP 4997532 B

SUMMERY OF THE INVENTION

PROBLEMS TO BE SOLVED BY THE INVENTION

Patent Document 2 prevents the grease that is applied to the seal lip from being peeled in advance by employing an appropriate shape of the seal member (a size of the seal lip or the like) . This configuration suppresses an increase of wear resistance and sealing failure. However, a property such as the wear resistance and the sealing performance of the grease itself to be applied to the seal lip in advance is not considered. Thus, the increase of the wear resistance and the sealing failure might cause due to the poor property of the grease. Further, Patent Document 3 reduces rotational torque by setting appropriate kinematic viscosity of a base oil of the grease. However, it might be difficult to achieve both of securing of the sealing performance and reducing of the rotational torque merely by setting the appropriate kinematic viscosity of the base oil.

Further, various grease compositions to be sealed in the bearing have been conventionally considered as disclosed in Patent Document 1. However, the grease to be applied to the seal lip or the mating material thereof is hardly considered.

For example, a rolling bearing or a hub bearing used for automobile electric auxiliary devices is easily invaded by rain water or water on a road, and thus it is important to suppress invasion of water and generation of rust. However, such a property is not considered for the grease disclosed in each of Patent Documents 2 and 3.

For example, less fluctuation of torque is required in an axle bearing in order to improve comfort of travelling or prevention of the sealing performance failure due to vibration. Further, the axle bearing is required to be used in a wide temperature range considering a temperature increase during high speed travelling or a use in a cold region. However, such a property required in the axle bearing is not considered for the grease disclosed in each of Patent Documents 2 and 3.

An object of the present invention is, in order to solve such problems, to provide a sealed rolling bearing that is capable of achieving both of low torque performance and high sealing performance by improving grease to be applied to a seal lip and a mating material thereof. Further, another object of the present invention is to provide a sealed rolling bearing that is capable of achieving both of superior water resistance and superior antirust performance, and further to provide a sealed rolling bearing that is capable of achieving both of torque stability and high and low temperature resistance.

MEANS FOR SOLVING THE PROBLEMS

A sealed rolling bearing of the present invention includes a seal member that seals a bearing space, a fixed side member, and a rotating side member. The seal member is fixed to the fixed side member and is configured to be in sliding contact with the rotating side member. The seal member has a seal lip that is in sliding contact with the rotating side member. In the sealed rolling bearing, grease is applied to at least one of a sliding contact surface of the seal lip and a sliding contact surface of the rotating side member with which the seal lip is in sliding contact. The grease contains a base oil and a thickener. The kinematic viscosity at 40 °C of the base oil is 6-45 $mm^2$/s. The worked penetration of the grease measured based on JIS K 2220 is 220-320.

The thickener may be a urea compound or a complex lithium soap. The urea compound may be obtained by causing a polyisocyanate component and a monoamine component to react with each other. The monoamine component may be at least one of aliphatic monoamine and alicyclic monoamine.

The base oil may be at least one of synthetic hydrocarbon oil, ester oil, and ether oil.

The base oil may be formed of only synthetic hydrocarbon oil or a mixed oil of the synthetic hydrocarbon oil and ester oil.

The kinematic viscosity at 40 °C of the base oil may be 6-20 $mm^2$/s, and the worked penetration of the grease may be 220-270.

As one aspect of the sealed rolling bearing, the grease may contain an antirust agent, and the worked penetration of the grease may be 220-280. Further, the antirust agent may be at least one of an ester-based antirust agent and a sulfonate-based antirust agent. The grease may contain an ester-based antirust agent and a sulfonate-based antirust agent as the antirust agent, and the grease may contain 0.5 mass% or more and less than 1.5 mass% of the antirust agent relative to the total amount of the base oil and the thickener.

As another aspect of the sealed rolling bearing, the grease may contain an antioxidant. The grease may contain 0.1 mass% or more and less than 3 mass% of the antioxidant relative to the total amount of the base oil and the thickener. The worked penetration of the grease may be 240-300. Further, the antioxidant may be an amine-based antioxidant.

The seal member may be formed of nitrile rubber. The seal lip may include a first seal lip, a second seal lip and a third seal lip in this order from an inner side of the bearing space. The grease may be applied to the sliding contact surface of each of the seal lips.

The sealed rolling bearing may be configured as a bearing that rotatably supports an axle.

A sealed rolling bearing includes a seal member that seals a bearing space, a fixed side member, and a rotating side member. The seal member is fixed to the fixed side member and is configured to be in sliding contact with the rotating side member. The seal member has a seal lip that is in sliding contact with the rotating side member. In the sealed rolling bearing, grease is applied to at least one of a sliding contact surface of the seal lip and a sliding contact surface of the rotating side member with which the seal lip is sliding contact. The grease contains a base oil, a thickener and an antioxidant. The grease contains 0.1 mass% or more and less than 3 mass% of the antioxidant relative to the total amount of the base oil and the thickener. The worked penetration of the grease measured based on JIS K 2220 is 240-300.

EFFECT OF THE INVENTION

The sealed rolling bearing of the present invention includes the seal member that seals the bearing space, the fixed side member, and the rotating side member. The seal member is fixed to the fixed side member and is configured to be in sliding contact with the rotating side member. The grease is applied to at least one of the sliding contact surface of the seal lip and the sliding contact surface of the rotating side member. The grease contains the base oil and the thickener. The kinematic viscosity at 40 °C of the base oil is 6-45 $mm^2$/s. The worked penetration of the grease measured based on JIS K 2220 is 220-320. According to this configuration, the grease applied to the sliding contact surface of the seal lip and/or the sliding contact surface of the rotating side member secures channeling performance and prevents the break of oil film in low speed, and thus low torque is realized and high sealing performance can be obtained.

The thickener is the urea compound or the complex lithium soap. The urea compound is obtained by causing the polyisocyanate component and the monoamine component to react with each other. The monoamine component is at least one of aliphatic monoamine and alicyclic monoamine. According to this configuration, low torque is effectively realized.

As one aspect of the sealed rolling bearing, the grease further contains the antirust agent, and the worked penetration of the grease is 220-280. According to this configuration, the grease applied to the sliding contact surface of the seal lip and/or the sliding contact surface of the rotating side member secures channeling performance and thus low torque is realized, and high sealing performance and antirust performance can be obtained. Further, the grease contains the ester-based antirust agent and the sulfonate-based antirust agent as the antirust agent, and the grease contains 0.5mass% or more and less than 1.5 mass% of the antirust agent relative to the total amount of the base oil and the thickener. According to this configuration, superior antirust performance can be obtained, and the shape of the grease when being in contact with water can be retained easily by suppressing the content of the antirust agent. Accordingly water resistance can be improved.

As another aspect of the sealed rolling bearing, the grease contains 0.1mass% or more and less than 3 mass% of the antioxidant relative to the total amount of the base oil and the thickener. The worked penetration of the grease is 240-300. According to this configuration, the seal member realizes low torque, superior torque stability, superior high temperature resistance, and superior low temperature resistance, which leads to high performance (low energy consumption) of the sealed rolling bearing sealed by the seal member.

The seal member is formed of nitrile rubber. The seal lip includes the first seal lip, the second seal lip and the third seal lip in this order from the inner side of the bearing space. The grease is applied to the sliding contact surface of each of the seal lips. According to this configuration, the low torque performance is secured and the sealing performance can be further improved.

The sealed rolling bearing is configured as a bearing that rotatably supports an axle. According to this configuration, high performance (low energy consumption) of the axle bearing such as a hub bearing can be realized.

The sealed rolling bearing of the present invention includes the seal member that seals the bearing space, the fixed side member, and the rotating side member. The seal member is fixed to the fixed side member and is configured to be in sliding contact with the rotating side member. The grease is applied to at least one of the sliding contact surface of the seal lip and the sliding contact surface of the rotating side member. The grease contains the base oil, the thickener and the antioxidant. The grease contains 0.1mass% or more and less than 3 mass% of the antioxidant relative to the total amount of the base oil and the thickener. The worked penetration of the grease measured based on JIS K 2220 is 240-300. According to this configuration, the seal member realizes low torque, superior torque stability, superior high temperature resistance, and superior low temperature resistance, which leads to high performance (low energy consumption) of the sealed rolling bearing sealed by the seal member.

BRIEF DESCRIPTION OF THE DRAWINGS

Fig. 1 is a vertical sectional view showing an example of a sealed rolling bearing of the present invention.
Fig. 2 is an enlarged sectional view showing a bearing sealing device at an inboard side in Fig. 1.
Fig. 3 is an enlarged sectional view showing the bearing sealing device at an outboard side in Fig. 1.
Fig. 4 is a vertical sectional view showing another example of the sealed rolling bearing of the present invention.
Fig. 5 is an enlarged sectional view showing the sealed rolling bearing in Fig. 4.
Figs. 6 (a) and 6 (b) are general views showing a producing method of grease.

MODE FOR CARRYING OUT THE INVENTION

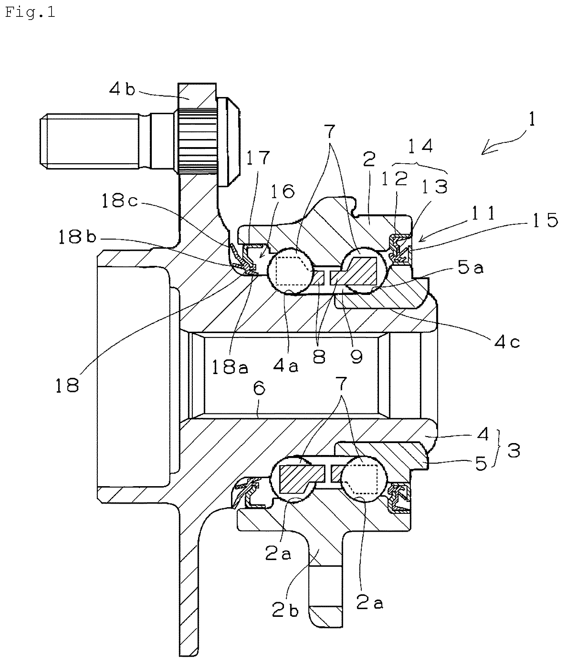

Embodiments of the present invention are described with reference to the drawings. Fig. 1 is a vertical sectional view showing a hub bearing as an example of a sealed rolling bearing of the present invention. A hub bearing 1 shown in Fig. 1 is an axle bearing at a driving side that rotatably supports an axle.

As shown in Fig. 1, the hub bearing 1 has an outer member 2, a hub ring 4, and an inner ring 5. The outer member 2 has: a vehicle body mounting flange 2b, which is mounted to a vehicle body (not shown), integrally formed on an outer periphery of the outer member 2; and double row outer raceway surfaces 2a, 2a formed on an inner periphery of the outer member 2. The hub ring 4 has: a wheel mounting flange 4b, which is mounted to a wheel (not shown), integrally formed on one end portion of the hub ring 4; one inner raceway surface 4a facing the double row outer raceway surfaces 2a, 2a, formed on an outer periphery of the hub ring 4; a cylindrical small diametrical stepped part 4c axially extending from the inner raceway surface 4a, formed on the outer periphery of the hub ring 4; and a torque transmitting serration 6 formed on an inner periphery of the hub ring 4. The inner ring 5 is press-fitted into the small diametrical stepped part 4c and has another inner raceway surface 5a formed on an outer periphery of the inner ring 5.

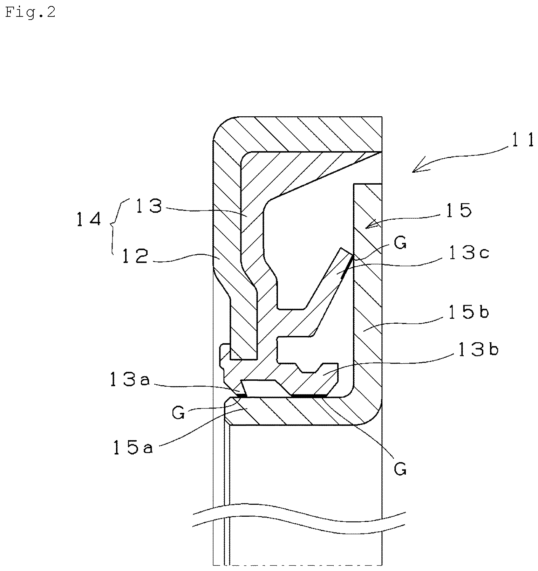

Double row rolling elements (balls) 7 are rollably housed by a cage 8 between the double row outer raceway surfaces 2a, 2a and the inner raceway surfaces 4a, 5a facing thereto. Bearing sealing devices 11, 16 are disposed in annular spaces formed between an inner member 3 serving as a rotating side member, formed by the hub ring 4 and the inner ring 5, and the outer member 2 serving as a fixed side member, respectively. The bearing sealing devices 11, 16 prevent a grease composition sealed in a bearing space 9 from leaking and prevent rain water or dust from invading from an outside into the bearing space 9. The bearing sealing device 11 at an inboard side (a right side in the figure) mounted between the outer member 2 and the inner ring 5, among these bearing sealing devices 11, 16 is described with reference to Fig. 2.

As shown in Fig. 2, the bearing sealing device 11 has a core metal 12, a seal ring 14, and a slinger 15. The core metal 12 is fitted into the outer member 2 and is formed in an L-shape in section. The seal ring 14 is formed by a seal member 13 that is vulcanizing-bonded integrally with the core metal 12. The slinger 15 is fitted onto the inner ring 5 and is formed in an L-shape in section. The slinger 15 and the core metal 12 of the seal ring 14 are formed by press-processing austenitic stainless steel sheet (SUS304 or the like defined by JIS), or cold rolled steel sheet (SPCC or the like defined by JIS) that is subjected to an antirust treatment.

Examples of the material of the seal member 13 include nitrile rubber (NBR), acryl rubber, silicone rubber, and fluororubber. In the example shown in Fig. 2, the seal member 13 has three seal lips including an inner seal lip 13a, an intermediate seal lip 13b, and an outer 13c disposed in this order from an inner side of the bearing space. A distal end of the outer seal lip 13c is in sliding contact with an inner side surface of a rising plate part 15b of the slinger 15, while the distal ends of the intermediate seal lip 13b and the inner seal lip 13a are in sliding contact with a cylindrical part 15a of the slinger 15. In this configuration, the core metal 12 corresponds to a fixed side member and the slinger 15 corresponds to a rotating side member.

In the configuration shown in Fig. 2, grease is applied to the sliding contact surface of the seal lip of the seal member. Specifically, as shown in Fig 2, the grease G is applied to each of the sliding contact surfaces of the seal lips 13a, 13b, 13c that are in sliding contact with the slinger 15. In this case, the grease G may be applied to the whole of the seal lip as long as the grease G is applied to at least the sliding contact surface of the seal lip. In this invention, the grease G contains a base oil and a thickener, and the worked penetration of the grease G is in a range of 220-320. The grease is described below.

As the base oil employed in the grease, the base oil generally used in the field of grease can be employed. Examples of the base oil include mineral oil such as paraffinic mineral oil and naphthenic mineral oil, synthetic hydrocarbon oil (non-polar oil) such as poly-$\alpha$-olefin (PAO) oil, alkylbenzene oil, alkylnaphthalene oil, polyphenyl oil, synthetic naphthenic oil, and polybutene oil, and ester oil, ether oil, silicone oil, and fluorine oil. Any one of these base oils may be employed alone or a combination of two or more of them may be employed.

Of these base oils, the base oil is preferably at least one of the synthetic hydrocarbon oil, the ester oil, and the ether oil. The base oil is more preferably the synthetic hydrocarbon oil only, a mixed oil of the synthetic hydrocarbon oil and the ester oil, or a mixed oil of the synthetic hydrocarbon oil and the ether oil. The base oil is further more preferably the synthetic hydrocarbon oil only, or a mixed oil of the synthetic hydrocarbon oil and the ester oil. In a case in which the mixed oil that contains the synthetic hydrocarbon oil is employed as the base oil, the synthetic hydrocarbon oil is preferably 60 mass% or more, more preferably 65-90 mass% relative to the whole of the base oil (the mixed oil).

The PAO oil as the synthetic hydrocarbon oil is $\alpha$-olefin or isomerized $\alpha$-olefin oligomer or polymer compound. Examples of the $\alpha$-olefin include 1-Octene, 1-Nonene, 1-Decene, 1-Dodecene, 1-Tridecene, 1-Tetradecene, 1-Pentadecene, 1-Hexadecene, 1-Heptadecene, 1-Octadecene, 1-Nonadecene, 1-Eicosene, 1-Docosene, and 1-Tetradocosene. Normally, a mixture of any these $\alpha$-olefins is employed.

Examples of the ester oil include diester oil such as dibutyl sebacate, di-2-ethylhexyl sebacate and dioctyl adipate, aromatic ester oil such as trioctyl trimellitate, tridecyl trimellitate and tetraoctyl pyromellitate, polyol ester oil such as trimethylolpropane caprylate, trimethylolpropane pelargonate and pentaerythritol ester oil, carbonic ester oil, and phosphate ester oil. Of these ester oils, pentaerythritol ester oil is preferable.

The kinematic viscosity at 40 °C of the base oil employed in the grease (in a case of mixed oil, the kinematic viscosity of the mixed oil, this shall be similarly applied hereinafter) is, for example, 6-45 mm$^2$/s, preferably 6-31 mm$^2$/s, more preferably 6-20 mm$^2$/s, further more preferably 7-17 mm$^2$/s, especially further more preferably 9-17 mm$^2$/s, from a viewpoint of preventing the break of oil film in low speed and of low torque performance.

The thickener employed in the grease is not especially limited, and thus a general thickener generally used in the field of grease can be employed. Examples of the thickener include soap-based thickener such as metal soap and complex metal soap, and non-soap-based thickener such as bentone, silica gel, diurea compound, triurea compound, tetraurea compound and urea-urethane compound. Examples of the metal soap include sodium soap, calcium soap and lithium soap. An example of the complex metal soap includes complex lithium soap. Of these thickeners, the diurea compound or the complex lithium soap is preferable, and the diurea compound is more preferable.

The diurea compound is obtained by causing a polyisocyanate component and a monoamine component to react with each other. Examples of the polyisocyanate component include phenylene diisocyanate, tolylene diisocyanate, diphenyl diisocyanate, diphenylmethane diisocyanate, octadecane diisocyanate, decane diisocyanate, and hexane diisocyanate. Examples of the monoamine component include aliphatic monoamine, alicyclic monoamine, and aromatic monoamine. Examples of the aliphatic monoamine include hexylamine, octylamine, dodecylamine, hexadecylamine, octadecylamine, stearylamine, and oleylamine. An example of the alicyclic monoamine includes cyclohexylamine. Examples of the aromatic monoamine include aniline, and p-toluidine.

Of these diurea compounds, it is preferable to employ the aromatic diisocyanate as the polyisocyanate component, and at least one of the aliphatic monoamine and the alicyclic monoamine as the monoamine component because the low torque performance can be obtained, which will be described later as Example. In particular, it is more preferable to employ an aliphatic and alicyclic diurea compound as the thickener that is formed by the aromatic diisocyanate as the polyisocyanate component and the 6-12C aliphatic monoamine and the alicyclic monoamine as the monoamine component. The ratio of the aliphatic monoamine and the alicyclic monoamine that form the aliphatic and alicyclic diurea compound is not especially limited, however the ratio of the aliphatic monoamine and the alicyclic monoamine is preferably set in a range between 3 : 1 and 1 : 3 in terms of a molar ratio, more preferably in a range between 2 : 1 and 1 : 2.

The base grease that contains the diurea compound as the thickener is formed by causing the polyisocyanate component and the monoamine component to react with each other in the base oil.

The complex lithium soap is synthesized from lithium hydroxide, aliphatic monocarboxylic acid, and dibasic acid such as aliphatic dicarboxylic acid. Examples of the aliphatic monocarboxylic acid include stearic acid, 12-hydroxystearic acid, 12-hydroxylauric acid, and 16-hydroxypalmitic acid. Examples of the aliphatic dicarboxylic acid include azelaic acid, sebacic acid, oxalic acid, malonic acid, succinic acid, glutaric acid, adipic acid, pimelic acid, suberic acid, undecandioic acid, and dodecanedioic acid.

Of these complex lithium soaps, it is preferable to employ a combination of 10C or more aliphatic monocarboxylic acid and 9C or less aliphatic dicarboxylic acid. In particular, 12-hydroxystearic acid is preferable as the 10C or more aliphatic monocarboxylic acid, and azelaic acid is preferable as the 9C or less aliphatic dicarboxylic acid.

The grease in the present invention may contain preferably 10-30 mass% of the thickener, more preferably 10-20 mass% of the thickener, further more preferably 12-18 mass% of the thickener, or 15-20 mass% of the thickener, relative to the total amount (100 mass%) of the base oil and the thickener. When the content of the thickener is set to be relatively small, the rate of the base oil can be made large so as to obtain the low torque performance easily.

The worked penetration (JIS K 2220) of the grease in the present invention is in a range of 220-320. Further, as described later as Example, the grease is preferably relatively hard from a viewpoint of the sealing performance. Specifically, the worked penetration is preferably in a range of 220-270, more preferably in a range of 220-250.

An especially preferable aspect of the grease contains the base oil having the kinematic viscosity at 40 °C of 6-20 mm$^2$/s, and a urea compound, as the thickener, formed by causing the polyisocyanate component and the monoamine component that is at least one of the aliphatic monoamine and alicyclic monoamine, to react with each other. The base oil contains at least synthetic hydrocarbon oil, and the worked penetration of the grease is in a range of 220-270.

Further, a known additive may be added as needed to the grease. Examples of the additive include an antioxidant such as an amine-based compound, a phenol-based compound, and a sulfur-based compound, and an antirust agent such as polyhydric alcohol ester. It is preferable that the grease does not contain an extreme pressure agent such as an organic zinc compound, and an organic molybdenum compound.

One aspect of the grease in the present invention may contain an antirust agent, in addition to the base oil and the thickener.

A compound rate of the antirust agent is preferably 0.5 mass% or more and less than 3.0 mass% relative to the whole of the base grease (100 mass%) formed by the base oil and the thickener. With the compound rate of the antirust agent within such a range, antirust performance can be obtained and the shape of the grease when being in contact with water can be retained easily. The compound rate of the antirust agent is preferably 0.5 mass% or more and less than 1.5 mass% relative to the whole of the base grease.

The kind of the antirust agent is not especially limited, and thus an ester-based antirust agent; a sulfonate-based antirust agent; a carboxylic acid-based antirust agent of straight chain fatty acid such as lauric acid and stearic acid, succinic acid, or alkyl succinic acid; a carboxylate-based antirust agent of metal (cobalt, manganese, or zinc) salt of fatty acid or naphthenic acid; or an amine-based antirust agent of alkoxyphenyl amine may be employed. Of these antirust agents, at least one of the ester-based antirust agent and the sulfonate-based antirust agent may be preferably employed.

Examples of the ester-based antirust agent include: partial ester of polyalcohol such as sorbitan, sorbitol, pentaerythritol, sucrose and glycerine, and carboxylic acid such as oleic acid and lauric acid; and succinic acid half ester such as alkylsuccinic acid half ester and alkenylsuccinic acid half ester. Any one of these ester-based antirust agents may be employed alone or a combination of two or more of them may be employed.

Of the above-described ester-based antirust agents, sorbitan fatty acid ester is more preferable. Examples of the sorbitan fatty acid ester include: sorbitan fatty acid monoester such as sorbitan monolaurate, sorbitan monostearate and sorbitan monooleate; and sorbitan trioleate. In a case in which the ester-based antirust agent is employed, the compound rate of the ester-based antirust agent is preferably less than 1 mass% relative to the whole of the base grease.

Examples of the sulfonate-based antirust agent include metal salt or amine salt of alkyl aromatic sulfonic acid such as alkylbenzene sulfonic acid and alkylnaphthalene sulfonic acid, or petroleum-based sulfonic acid obtained by sulfonating an aromatic component in a petroleum distillate component. Examples of the metal forming the metal salt include: alkaline earth metal such as barium, calcium and magnesium; alkali metal such as sodium and lithium; and zinc. Examples of the amine forming the amine salt include ethylamine and trimethylamine. Any one of these sulfonate-based antirust agents may be employed alone or a combination of two or more of them may be employed.

In particular, as the antirust agent, a combination of the ester-based antirust agent and the sulfonate-based antirust agent is preferable. By combining two kinds of the antirust agents, the antirust performance can be improved, compared to a configuration employing only one kind of the antirust agent.

In a case in which the grease contains the antirust agent, the worked penetration (JIS K 2220) of the grease is preferably in a range of 220-280, and more preferably in a range of 240-280.

An especially preferable aspect of the grease containing the antirust agent contains: a base oil having the kinematic viscosity at 40 °C of 6-20 mm²/s; a urea compound as the thickener that is obtained by causing the polyisocyanate component and the monoamine component that is at least one of the aliphatic monoamine and the alicyclic monoamine to react with each other; and the ester-based antirust agent and the sulfonate-based antirust agent as the antirust agent, wherein the worked penetration of the grease is in a range of 220-280. Further, in this case, the compound rate of the antirust agent is preferably 0.5mass% or more and less than 1.5 mass% relative to the whole of the base grease.

Another aspect of the grease in the present invention contains an antioxidant in addition to the base oil and the thickener.

The compound rate of the antioxidant is 0.1mass% or more and less than 3 mass% relative to the whole of the base grease (100 mass%) formed by the base oil and the thickener. With the compound rate of the antioxidant within such a range, degradation due to oxidation of the grease can be suppressed and fluctuation of torque in rotating of the bearing can be suppressed. The compound rate of the antioxidant is preferably 0.5mass% or more and less than 3 mass%, and more preferably 0.5-2 mass% relative to the whole of the base grease.

Examples of the antioxidant include: amine-based antioxidants such as phenyl-1-naphthylamine, phenyl-2-naphthylamine, diphenyl-p-phenylenediamine, dipyridylamine, phenothiazine, N-methylphenothiazine, N-ethylphenothiazine, 3,7-dioctylphenothiazine, p,p'-dioctyldiphenylamine, N,N'-diisopropyl-p-phenylenediamine; and a phenol-based antioxidant such as 2,2'-methylenebis(6-tert-butyl-4-methylphenol). Any one of these antioxidants may be employed alone or a combination of two or more of them may be employed. The amine-based antioxidant may be preferably employed as the antioxidant.

In a case in which the grease contains the antioxidant, the worked penetration (JIS K 2220) of the grease is preferably in a range of 240-300, and more preferably in a range of 240-280 because the fluctuation of torque can be further suppressed, which will be described later as Example.

An especially preferable aspect of the grease containing the antioxidant contains: a base oil having the kinematic viscosity at 40 °C of 6-20 mm²/s; a urea compound as the thickener that is obtained by causing the polyisocyanate component and the monoamine component that is at least one of the aliphatic monoamine and the alicyclic monoamine to react with each other; and the amine-based antioxidant, wherein the compound rate of the antioxidant is 0.1-2 mass% relative to the whole of the base grease and the worked penetration of the grease is in a range of 240-300.

The grease in the present invention may contain both of the antirust agent and the antioxidant.

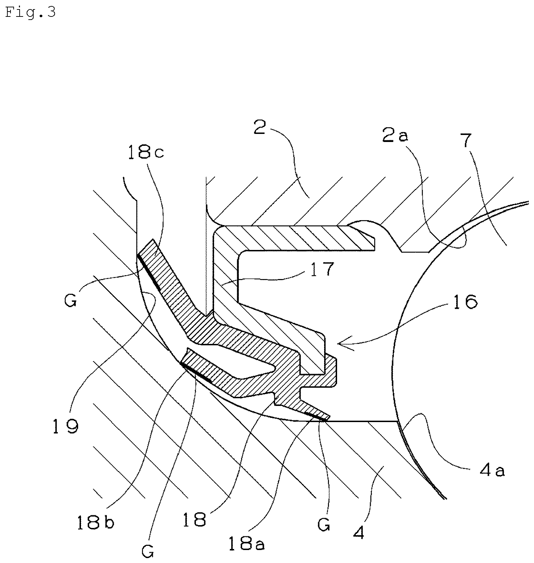

A bearing sealing device 16 is now described with reference to Fig. 3. The bearing sealing device 16 has a core metal 17 and a seal member 18. The core metal 17 is formed in an annular shape and is fitted into the outer member 2. The seal member 18 is vulcanizing-bonded integrally with the core metal 17. The core metal 17 is formed similar to the above-described slinger or the like. The seal member 18 is formed of elastic material such as nitrile rubber. The seal member 18 has two side lips (dust seals) 18b, 18c and one single radial lip (grease seal) 18a. Each distal end of the lips is configured to come into directly sliding contact with a surface of the hub ring 4, namely a sliding contact surface 19 formed in an arc shape in a base portion at an inboard side of the wheel mounting flange 4b.

As shown in Fig. 3, also in the bearing sealing device 16, grease G is applied to a surface of each of the seal lips 18a, 18b, 18c that is in sliding contact with the hub ring 4, specifically one side surface of a distal end portion of each seal lip. With this, sealing performance is secured and rotational torque is reduced.

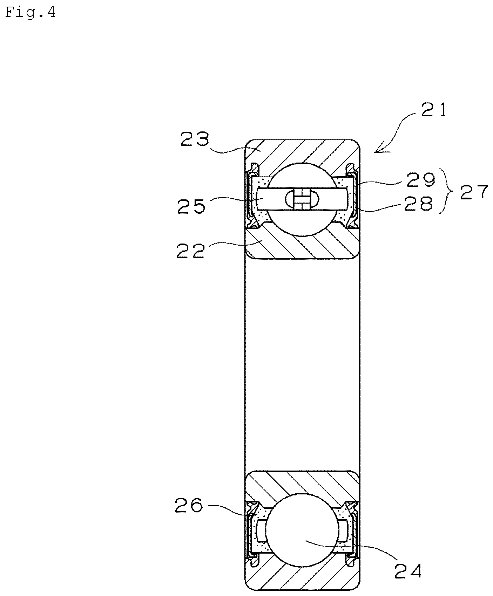

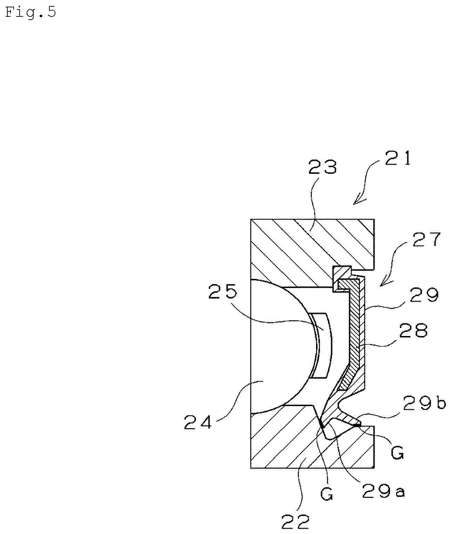

Fig. 4 is a vertical sectional view showing a deep groove ball bearing as another example of the sealed rolling bearing of the present invention. Fig. 5 is a partial, enlarged view of Fig. 4. A rolling bearing 21 has an inner ring 22, an outer ring 23, and a plurality of rolling elements 24. The inner ring 22 has an inner ring raceway surface on its outer peripheral surface. The outer ring 23 has an outer ring raceway surface on its inner peripheral surface. The inner ring 22 and the outer ring 23 are disposed coaxially with each other. The rolling elements 24 are disposed between the inner ring raceway surface and the outer ring raceway surface. The rolling elements 24 are retained by a cage 25. Bearing sealing devices 27 are mounted to both opening ends in the axial direction between the inner ring and the outer ring. A grease composition 26 is sealed at least around the rolling elements 24. Each of the inner ring 22, the outer ring 23, and the rolling element 24 is formed of iron-based metal material and lubricated by the grease composition 26 interposed between the rolling element 24 and the raceway surface.

As shown in Fig. 5, the bearing sealing device 27 has a core metal 28 and a seal member 29. The core metal 28 is formed by press-processing cold rolled steel sheet or the like and is formed in a disc shape. The seal member 29 is vulcanizing-bonded integrally with the core metal 28. The seal member 29 has a main lip 29a that is formed by bifurcating a distal end portion at the side of the inner ring 22, and a dust lip 29b that is located at the outer side in the bearing space relative to the main lip 29a. The seal member 29 is partially fixed to a seal groove formed on an inner periphery of an end portion of the outer ring 23 serving as the fixed side member. Each seal lip is in sliding contact with a seal groove or the like having a substantially U-shape in section, formed on an outer periphery of an end portion of the inner ring 22 serving as the rotating side member. As shown in Fig. 5, also in the bearing sealing device 27, the grease G is applied to a surface of each of the seal lips 29a, 29b that is in sliding contact with the inner ring 22, specifically one side surface of a distal end portion of each seal lip.

Figs. 4 and 5 exemplarily show the deep groove ball bearing as the sealed rolling bearing, however the bearing sealing device of the prevent invention may be applied to a cylindrical roller bearing, a tapered roller bearing, a self-aligning roller bearing, a needle roller bearing, a thrust cylindrical roller bearing, a thrust tapered roller bearing, a thrust needle roller bearing, and a thrust self-aligning roller bearing, in addition to the above-described bearing.

In the sealed rolling bearings shown in Figs. 1 to 5, the grease of the present invention is applied to the sliding contact surface of the seal lip of the seal member in advance, however in the alternative or in addition to this configuration, the grease may be applied to a surface of the rotating side member with which the seal lip is in sliding contact in advance.

The usage of the sealed rolling bearing of the present invention is not especially limited, and thus as described in the following Example, the sealed rolling bearing of the present invention is preferably used in, in particular, a low rotational speed rotation usage because the break of oil film can be prevented in low rotational speed and low torque performance can be obtained. The sealed rolling bearing of the present invention is applied to a bearing used in a rotational speed range of, for example, 2,000 minute$^{-1}$ or less. Here, the manner of "the bearing is used in a rotational speed range of 2,000 minute$^{-1}$ or less" means that the main rotational speed (the rotational speed in a steady state) of the bearing in use is 2,000 minute$^{-1}$ or less. The main rotational speed may be 1,500 minute$^{-1}$ or less, or 1,000 minute$^{-1}$ or less.

EXAMPLE

Test Example A

First, the grease having each composition shown in Tables 1 to 3 was produced. In each of Tables 1 to 3, mass% of each of the base oil and the thickener shows the content rate relative to the base grease (the total of the base oil and the thickener) . The remarks 1) to 8) below Table 1 are also applied to each of Tables 2 and 3.

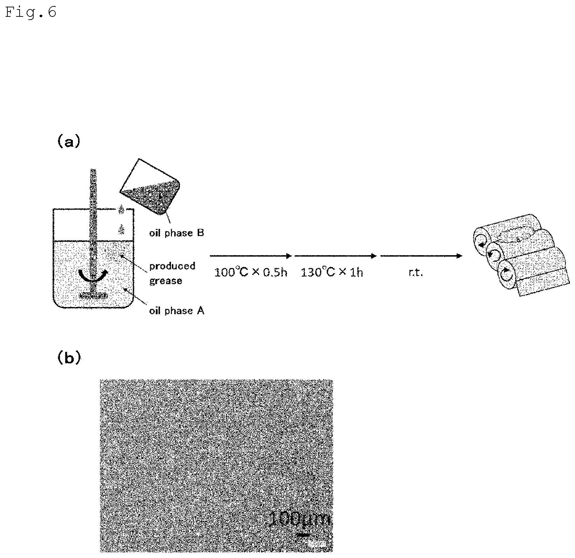

The grease that employs the diurea compound as the thickener (the greases other than test example A5) was produced as shown in Fig. 6(a).

First, an oil phase A that mixes isocyanate (4,4'-diphenylmethane diisocyanate: MDI) and a half of the base oil at 60 °C and an oil phase B that mixes amine and the other half of the base oil at a specified temperature (the temperature between room temperature and 60 °C) were prepared. Next, the oil phase B was added and mixed while stirring the oil phase A, and then the oil phase was heated at 100 °C for 30 minutes (a urea reaction) . The completion of the reaction was checked by an infrared spectroscopy (IR). Thereafter, the oil phase was heated at 130 °C for one hour (reaction stabilization) and then slowly cooled to the room temperature. Thereafter, the grease was subjected to a uniformizing treatment and smoothened using three roll mills. Fig. 6(b) shows a microphotograph of the obtained grease.

The grease that employs complex lithium soap as the thickener (the grease of test example A5) was produced as below.

First, 12-hydroxystearic acid was added to a half of the base oil and heated up to 90 °C, and then lithium hydroxide diluted with water at a dilution ratio of about 10 times was added thereto. Thereafter, a non-ionic surfactant was added thereto and strongly stirred. Thereafter, azelaic acid was added thereto and stirred, and then the lithium hydroxide diluted with water at a dilution ratio of about 10 times was added thereto several times and stirred for about 30 minutes. The completion of the reaction was checked by an infrared spectroscopy (IR). Thereafter, the antioxidant was added thereto and heated up to 180 °C, and then the remaining base oil was added, and the grease was left and cooled to the room temperature. Thereafter, the grease was subjected to a uniformizing treatment and smoothened using three roll mills.

The worked penetration (JIS K 2220) of the obtained grease was measured.

The obtained grease was applied to respective one side surfaces of the distal end portions of three seal lips of a seal member ($\phi$ 60-70 mm) formed of nitrile rubber. The seal member was mounted to a component serving as a hub outer ring, and a slinger formed of SUS430 was mounted to a component serving as a hub inner ring. And then, the components were assembled such that the seal lip and the slinger are in contact with each other.

Seal torque test

The torque (N·m) was measured while the seal lip is being in sliding contact after 15 minutes of the beginning of the test in a condition of inner ring rotating at rotational speed of 600 or 50 minute$^{-1}$ in a room temperature atmosphere. In a case of the rotational speed of 600 minute$^{-1}$ in this test, the torque of 0.20 or more is determined as unacceptable.

Torque fluctuation test

The component serving as the hub inner ring was rotated for 15 minutes at rotational speed of 50 minute$^{-1}$ in a room temperature atmosphere. The seal member was in sliding contact with the slinger (a mating material) formed of SUS430. The torque (N·m) was measured while the seal lip and the slinger are in sliding contact with each other, and a difference between the maximum torque and the minimum torque in the last five minutes was calculated. The difference (the torque fluctuation) of less than 0.01 N·m is determined as ◎, the difference of 0.01 N·m or more and less than 0.02 N·m is determined as o, and the difference of 0.02 N·m or more is determined as ×. The determination is also shown in Tables 1 to 3.

Grease leakage test

The above-described obtained grease was applied by 0.4 g to a seal groove formed on an outer periphery of an inner ring of a 6204 deep groove ball bearing. The seal member formed of nitrile rubber was mounted such that the seal lip is in contact with the seal groove.
A leakage rate of the grease during an operation for 24 hours was measured in a condition in which the test bearing was fixed, an axial load of 640 N and a radial load of 67 N were applied to the outer ring constrained by a load cell, and the inner ring was rotated at rotational speed of 5,000 minute$^{-1}$ at 80 °C. The leakage rate was calculated by the following formula. A well-known grease composition (the composition thereof is difference from that of the grease shown in Tables 1 to 3) was sealed by 0.05 g into the bearing space before the operation.

$$\text{Leakage rate (mass\%)} = (\text{Bearing weight before operation}$$
$$- \text{Bearing weight after operation}) / (\text{Bearing weight before}$$
$$\text{operation}) \times 100$$

The leakage rate of less than 8 mass% is determined as ◎, the leakage rate of 8 mass% or more and less than 13 mass% is determined as o, and the leakage rate of 13 mass% or more is determined as ×. The determination is also shown in Tables 1 to 3.

Table 1

| | | Test Example | | | | | | | | |
|---|---|---|---|---|---|---|---|---|---|---|
| | | A1 | A2 | A3 | A4 | A5 | A6 | A7 | A8 | A9 |
| Base oil (mass%) | Synthetic hydrocarbon oil 1) | - | - | - | - | - | 37 | 30 | 29 | 30 |
| | Synthetic hydrocarbon oil 2) | 80 | 88.1 | 89 | 87 | 81.4 | 45 | 37 | 35 | 36 |
| | Synthetic hydrocarbon oil 3) | - | - | - | - | - | - | - | - | - |
| | Synthetic hydrocarbon oil 4) | - | - | - | - | - | - | - | - | - |
| | Ester oil 5) | - | - | - | - | - | - | 17 | 16 | - |
| | Ester oil 6) | - | - | - | - | - | - | - | - | - |
| | Ether oil 7) | - | - | - | - | - | - | - | - | 17 |
| Thickener (mass%) | Amine: cyclohexylamine | 8.8 | 1.6 | 3.1 | - | - | 3.7 | 3.3 | 8.8 | 3.5 |
| | Amine: octylamine | - | 4.2 | 2 | 6.6 | - | 4.9 | 4.3 | - | 4.6 |
| | Amine: stearylamine | - | - | - | - | - | - | - | - | - |
| | Diisocyanate: MDI | 11.2 | 6.1 | 5.9 | 6.4 | - | 9.4 | 8.4 | 11.2 | 8.9 |
| | Amine: p-toluidine | - | - | - | - | - | - | - | - | - |
| | Complex lithium soap 8) | - | - | - | - | 18.6 | - | - | - | - |
| Base oil viscosity (mm$^2$/s) at 40°C | | 17 | 17 | 17 | 17 | 17 | 10 | 10 | 10 | 10 |
| Worked penetration (60-stroke) | | 300 | 300 | 300 | 300 | 300 | 250 | 250 | 250 | 250 |
| Seal torque test (600 minute$^{-1}$) (N·m) | | 0.15 | 0.13 | 0.14 | 0.15 | 0.16 | 0.11 | 0.11 | 0.12 | 0.11 |
| Seal torque test (50 minute$^{-1}$) (N·m) | | 0.11 | 0.10 | 0.10 | 0.11 | 0.11 | 0.09 | 0.09 | 0.10 | 0.09 |
| Seal torque fluctuation test (N·m) | | ○ | ○ | ○ | ○ | ○ | ◎ | ◎ | ◎ | ◎ |
| Leakage rate (mass%) | | ◎ | ◎ | ◎ | ◎ | ○ | ○ | ◎ | ◎ | ◎ |

1) 5 mm$^2$/s at 40 °C (Shinfluid 201 produced by NIPPON STEEL Chemical & Material Co., Ltd.)

2) 17 mm$^2$/s at 40 °C (Shinfluid 401 produced by NIPPON STEEL Chemical & Material Co., Ltd.)

3) 31 mm$^2$/s at 40 °C (Shinfluid 601 produced by NIPPON STEEL Chemical & Material Co., Ltd.)

4) 47 mm$^2$/s at 40 °C (Shinfluid 801 produced by NIPPON STEEL Chemical & Material Co., Ltd.)

5) 16 mm$^2$/s at 40 °C (Kaolube 162 produced by Kao Corporation)

6) 31 mm$^2$/s at 40 °C (Kaolube 262 produced by Kao Corporation)

7) 16 mm$^2$/s at 40 °C (Hilube LB-15 produced by MORESCO Corporation) 8) 12-hydroxystearic acid + lithium hydroxide + azelaic acid

Table 2

| | | Test Example | | | | | | | | |
|---|---|---|---|---|---|---|---|---|---|---|
| | | A10 | A11 | A12 | A13 | A14 | A15 | A16 | A17 | A18 |
| Base oil (mass%) | Synthetic hydrocarbon oil 1) | 57 | 31 | - | - | - | 31 | 32 | 32 | 32.1 |
| | Synthetic hydrocarbon oil 2) | 10 | 37.9 | - | 71 | - | 37 | 38 | 39 | 40 |
| | Synthetic hydrocarbon oil 3) | - | - | 87 | - | 71 | - | - | - | - |
| | Synthetic hydrocarbon oil 4) | - | - | - | - | - | - | - | - | - |
| | Ester oil 5) | 16.9 | 17 | - | 17 | - | 17 | 18 | 18 | 18 |
| | Ester oil 6) | - | - | - | - | 17 | - | - | - | - |
| | Ether oil 7) | - | - | - | - | - | - | - | - | - |
| Thickener (mass%) | Amine: cyclohexylamine | 4.5 | 4 | 3.7 | 3.4 | 3.4 | 4.2 | 3.4 | 3.1 | 2.8 |
| | Amine: octylamine | 2.9 | 2.6 | 2.4 | 2.2 | 2.2 | 2.8 | 2.2 | 2 | 1.8 |
| | Amine: stearylamine | - | - | - | - | - | - | - | - | - |
| | Diisocyanate: MDI | 8.7 | 7.5 | 6.9 | 6.4 | 6.4 | 8 | 6.4 | 5.9 | 5.3 |
| | Amine: p-toluidine | - | - | - | - | - | - | - | - | - |
| | Complex lithium soap 8) | - | - | - | - | - | - | - | - | - |
| Base oil viscosity (mm$^2$/s) at 40°C | | 7 | 10 | 31 | 17 | 31 | 10 | 10 | 10 | 10 |
| Worked penetration (60-stroke) | | 240 | 240 | 240 | 240 | 240 | 220 | 270 | 300 | 320 |
| Seal torque test (600 minute$^{-1}$) (N·m) | | 0.08 | 0.09 | 0.18 | 0.13 | 0.18 | 0.09 | 0.10 | 0.11 | 0.11 |
| Seal torque test (50 minute$^{-1}$) (N·m) | | 0.09 | 0.07 | 0.10 | 0.10 | 0.10 | 0.08 | 0.10 | 0.09 | 0.10 |
| Seal torque fluctuation test (N·m) | | ○ | ◎ | ◎ | ◎ | ◎ | ◎ | ◎ | ○ | ○ |
| Leakage rate (mass%) | | ○ | ◎ | ◎ | ◎ | ◎ | ◎ | ◎ | ○ | ○ |

Table 3

| | | Test Example | | | | | | | |
|---|---|---|---|---|---|---|---|---|---|
| | | A19 | A20 | A21 | A22 | A23 | A24 | A25 | A26 |
| Base oil (mass%) | Synthetic hydrocarbon oil 1) | - | - | 78 | - | 30.1 | 33 | 37 | 30 |
| | Synthetic hydrocarbon oil 2) | 81 | 79 | - | - | 37 | 40 | 46 | 36 |
| | Synthetic hydrocarbon oil 3) | - | - | - | - | - | - | - | - |
| | Synthetic hydrocarbon oil 4) | - | - | - | 88 | - | - | - | - |
| | Ester oil 5) | - | - | - | - | 17 | 18 | - | 17 |
| | Ester oil 6) | - | - | - | - | - | - | - | - |
| | Ether oil 7) | - | - | - | - | - | - | - | - |

(continued)

| Thickener (mass%) | | Test Example | | | | | | | |
|---|---|---|---|---|---|---|---|---|---|
| | | A19 | A20 | A21 | A22 | A23 | A24 | A25 | A26 |
| | Amine: cyclohexylamine | - | - | - | 3.4 | 4.5 | 2.5 | - | - |
| | Amine: octylamine | - | - | 11.2 | 2.2 | 2.9 | 1.7 | 8.6 | 8.6 |
| | Amine: stearylamine | - | 14.3 | - | - | - | - | - | - |
| | Diisocyanate: MDI | 10.2 | 6.7 | 10.8 | 6.4 | 8.5 | 4.8 | 8.4 | 8.4 |
| | Amine: p-toluidine | 8.8 | - | - | - | - | - | - | - |
| | Complex lithium soap 8) | - | - | - | - | - | - | - | - |
| Base oil viscosity (mm²/s) at 40°C | | 17 | 17 | 5 | 47 | 10 | 10 | 10 | 10 |
| Worked penetration (60-stroke) | | 300 | 300 | 340 | 240 | 200 | 340 | 340 | 360 |
| Seal torque test (600 minute⁻¹) (N·m) | | 0.19 | 0.19 | 0.10 | 0.22 | 0.13 | 0.11 | 0.10 | 0.11 |
| Seal torque test (50 minute⁻¹) (N·m) | | 0.12 | 0.12 | 0.09 | 0.12 | 0.12 | 0.10 | 0.09 | 0.09 |
| Seal torque fluctuation test (N·m) | | ○ | ○ | × | ◎ | × | × | × | × |
| Leakage rate (mass%) | | ○ | ○ | × | ◎ | ◎ | × | × | × |

As shown in Tables 1 to 3, the grease of each of the test examples A1 to A20 that contains the base oil and the thickener, wherein the base oil has the kinematic viscosity at 40 °C of 6-45 mm²/s and the worked penetration of the grease is 220-320, shows excellent result in each test.

According to the results shown in Tables 1 to 3, as the kinematic viscosity at 40 °C of the base oil decreases within a range of 6-45 mm²/s, lower torque is realized in the torque seal test (see the test examples A10 to A14 or the like). In the test example A22 (the kinematic viscosity of 47 mm²/s), the torque is large. Further, in the test example A21 (the kinematic viscosity of 5 mm²/s), excellent result is shown in the seal torque test, however the grease is largely leaked in the grease leakage test. It is assumed that the worked penetration is large and the grease is soft.

It is found that the worked penetration of the grease affects, in particular, the result of each of the torque fluctuation test and the grease leakage test. For example, in the test examples A6 to A9, A15 to A18, and A23 to A26, the kinematic viscosity of the base oil is identical to each other, however the test examples A24 to A26 of which the worked penetrations are more than 320 show large torque fluctuation and much leakage of the grease, while the test examples A6 to A9 and A15 to A18 of which the worked penetrations are less than 320 show excellent results. In addition, as the worked penetration becomes small, the leakage rate is improved. When the worked penetration is small, the grease becomes harder, and thus the leakage rate becomes high. The test example A23 of which the worked penetration is small shows high leakage rate, while the torque fluctuation becomes large.

In the test example A, according to the results shown in Tables 1 to 3, it is preferable to employ the base oil having low kinematic viscosity in order to decrease the seal torque, while it becomes difficult to obtain hard grease. In this point, when the appropriate thickener and the appropriate kind of the base oil are combined, the worked penetration can be set in an appropriate numerical range while employing the base oil having low kinematic viscosity. Specifically, by combining the base oil having low kinematic viscosity (the synthetic hydrocarbon oil only, the mixed oil of the synthetic hydrocarbon oil and the ester oil, or the mixed oil of the synthetic hydrocarbon oil and the ether oil) and the thickener (the aliphatic diurea compound, the alicyclic diurea compound, or the aliphatic and alicyclic diurea compound), the worked penetration is set in a desired numerical range.

Test Example B

The grease having each composition shown in Tables 4 to 6 was produced. In each of Tables 4 to 6, mass% of each of the base oil, the thickener, and the antirust agent shows the content rate relative to the base grease (the total of the base oil and the thickener) . The remarks 1) to 9) below Table 4 are also applied to each of Tables 5 and 6.

Each grease was produced similar to the test example A as shown in Fig. 6(a).

The worked penetration (JIS K 2220) of the obtained grease was measured.

Seal torque test

The obtained grease was applied by total 0.6 g, to respective one side surfaces of the distal end portions of three seal lips of the seal member ($\phi$ 60-70 mm) formed of nitrile rubber. The seal member was mounted to a component serving as a hub outer ring, and a slinger formed of SUS430 was mounted to a component serving as a hub inner ring. And then, the components were assembled such that such that the seal lip and the slinger are in contact with each other.
The torque (N·m) was measured for one minute while the seal lip is being in sliding contact after 30 minutes of the beginning of the test in a condition of inner ring rotating at rotational speed of 600 minute$^{-1}$ in a room temperature atmosphere. In this test, the torque of 0.20 or more is determined as unacceptable.

Water resistance test

The grease was applied by total 0.4 g to seal grooves formed on an outer periphery of an inner ring and an inner periphery of an outer ring of a 6204 stainless bearing, and a seal member formed of nitrile rubber was mounted such that a seal lip is in contact with the seal groove of the inner ring. A well-known grease composition (the composition thereof is difference from that of the grease shown in Tables 4 to 6) was sealed by 0.05 g into the bearing space. A test that modifies a water washout resistance test defined in JIS K 2220 was executed on this test bearing.
After the test bearing was assembled to a housing of a water washout resistance tester, the test bearing was submerged into hot water at 79 °C. Thereafter, the hot water at 79 °C was injected at a water rate of 6 ml/s from an injection nozzle for 120 minutes to the test bearing submerged in the hot water while rotating the test bearing at rotational speed of 600 minute$^{-1}$. A water invasion amount into the test bearing was calculated after the test based on the following formula.

$$\text{Water invasion amount (g) = Bearing weight before}$$
$$\text{operation - Bearing weight after operation}$$

As an evaluation of the water invasion amount, the water invasion amount of less than 0.5 g is determined as ⊚, the water invasion amount of 0.5g or more and less than 1.0 g is determined as o, and the water invasion amount of 1.0 g or more is determined as ×. The determination is also shown in Tables 4 to 6.

Rust test

A tapered roller bearing to which the grease is applied was immersed for 10 seconds into saltwater containing 1 mass% of salt and was left in a high humidity environment. The bearing was taken out after the test, and an outer ring rolling surface was visually checked. In an evaluation, the outer ring rolling surface is divided into 32 regions, and the rust generation rate is calculated based on the number of the regions in which rust is generated.

Bearing: 4T-30204

Grease sealed amount: 2.1 g

Test temperature: 40 °C

Test humidity: 100%RH

Test hour: 48 hours

As the evaluation of the rust generation rate, the rust generation rate of less than 25% is determined as ⊚, the rust generation rate of 25% or more and less than 75% is determined as o, and rust generation rate of 75% or more is determined as ×. The determination is also shown in Tables 4 to 6.

Table 4

| | | Test Example | | | | | | | |
|---|---|---|---|---|---|---|---|---|---|
| | | B1 | B2 | B3 | B4 | B5 | B6 | B7 | B8 |
| Base oil (mass%) | Synthetic hydrocarbon oil 1) | 40.8 | 41.1 | 41.4 | 41.3 | 40.8 | 40.8 | 41.3 | 41.3 |
| | Synthetic hydrocarbon oil 2) | 24 | 24.1 | 24.3 | 24.3 | 24 | 24 | 24.3 | 24.3 |
| | Synthetic hydrocarbon oil 3) | - | - | - | - | - | - | - | - |
| | Synthetic hydrocarbon oil 4) | - | - | - | - | - | - | - | - |
| | Ester oil 5) | 16.2 | 16.3 | 16.4 | 16.4 | 16.2 | 16.2 | 16.4 | 16.4 |
| | Ester oil 6) | - | - | - | - | - | - | - | - |
| Thickener (mass%) | Amine: octylamine | 6.7 | 6.5 | 6.3 | 6.3 | 6.7 | 6.7 | 6.3 | 6.3 |
| | Amine: cyclohexylamine | 2.6 | 2.5 | 2.4 | 2.5 | 2.6 | 2.6 | 2.5 | 2.5 |
| | Diisocyanate: MDI | 9.7 | 9.5 | 9.2 | 9.2 | 9.7 | 9.7 | 9.2 | 9.2 |
| Antirust agent (mass%) | Sorbitan monooleate 7) | 0.5 | 0.5 | 0.5 | 0.5 | 1 | - | - | - |
| | Sorbitan trioleate 8) | - | - | - | - | - | 0.5 | - | - |
| | Zinc sulfonate 9) | 0.5 | 0.5 | 0.5 | - | - | - | 0.5 | 1 |
| Base oil viscosity (mm$^2$/s) at 40°C | | 9 | 9 | 9 | 9 | 9 | 9 | 9 | 9 |
| Worked penetration (60-stroke) | | 240 | 260 | 280 | 280 | 280 | 280 | 280 | 280 |
| Seal torque test (N·m) | | 0.09 | 0.10 | 0.10 | 0.10 | 0.10 | 0.10 | 0.10 | 0.10 |
| Water invasion amount (g) | | ◎ | ◎ | ◎ | ◎ | ○ | ○ | ○ | ○ |
| Rust generation rate (%) | | ◎ | ◎ | ◎ | ○ | ○ | ○ | ○ | ○ |

1) 5 mm$^2$/s at 40 °C (Shinfluid 201 produced by NIPPON STEEL Chemical & Material Co., Ltd.)

2) 17 mm$^2$/s at 40 °C (Shinfluid 401 produced by NIPPON STEEL Chemical & Material Co., Ltd.)

3) 31 mm$^2$/s at 40 °C (Shinfluid 601 produced by NIPPON STEEL Chemical & Material Co., Ltd.)

4) 47 mm$^2$/s at 40 °C (Shinfluid 801 produced by NIPPON STEEL Chemical & Material Co., Ltd.)

5) 16 mm$^2$/s at 40 °C (Kaolube 162 produced by Kao Corporation)

6) 31 mm$^2$/s at 40 °C (Kaolube 262 produced by Kao Corporation) 7) Sorbitan monooleate produced by FUJIFILM Wako Pure Chemical Corporation 8) Sorbitan trioleate produced by FUJIFILM Wako Pure Chemical Corporation 9) NA-SUL ZS produced by King Industries

Table 5

| | | Test Example | | | | | | | |
| | | B9 | B10 | B11 | B12 | B13 | B14 | B15 | B16 |
|---|---|---|---|---|---|---|---|---|---|
| Base oil (mass%) | Synthetic hydrocarbon oil 1) | 41.3 | 41.3 | 40.9 | 42.4 | 43.5 | - | - | - |
| | Synthetic hydrocarbon oil 2) | 24.3 | 24.3 | 24 | 24.9 | 37 | 66.4 | - | - |
| | Synthetic hydrocarbon oil 3) | - | - | - | - | - | - | 83 | 67.2 |
| | Synthetic hydrocarbon oil 4) | - | - | - | - | - | - | - | - |
| | Ester oil 5) | 16.4 | 16.4 | 16.2 | 16.8 | - | 16.6 | - | - |
| | Ester oil 6) | - | - | - | - | - | - | - | 16.8 |
| Thickener (mass%) | Amine: octylamine | 6.3 | 6.3 | 5.1 | 2.9 | 6.9 | 6 | 6 | 5.6 |
| | Amine: cyclohexylamine | 2.5 | 2.5 | 3.9 | 4.5 | 2.6 | 2.3 | 2.3 | 2.2 |
| | Diisocyanate: MDI | 9.2 | 9.2 | 9.9 | 8.5 | 10 | 8.7 | 8.7 | 8.2 |
| Antirust agent (mass%) | Sorbitan monooleate 7) | 0.5 | 0.5 | 0.5 | 0.5 | 0.5 | 0.5 | 0.5 | 0.5 |
| | Sorbitan trioleate 8) | | | | | | | | |
| | Zinc sulfonate 9) | 0.5 | 1 | 0.5 | 0.5 | 0.5 | 0.5 | 0.5 | 0.5 |
| Base oil viscosity (mm2/s) at 40°C | | 9 | 9 | 9 | 9 | 9 | 17 | 31 | 31 |
| Worked penetration (60-stroke) | | 280 | 280 | 240 | 240 | 260 | 240 | 240 | 240 |
| Seal torque test (N·m) | | 0.10 | 0.10 | 0.09 | 0.08 | 0.10 | 0.13 | 0.18 | 0.18 |
| Water invasion amount (g) | | ◎ | ○ | ◎ | ◎ | ◎ | ◎ | ◎ | ◎ |
| Rust generation rate (%) | | ◎ | ◎ | ◎ | ◎ | ◎ | ◎ | ◎ | ◎ |

Table 6

| | | Test Example | | | |
| | | B17 | B18 | B19 | B20 |
|---|---|---|---|---|---|
| Base oil (mass%) | Synthetic hydrocarbon oil 1) | 40.3 | 41.5 | 41.8 | - |
| | Synthetic hydrocarbon oil 2) | 23.7 | 24.4 | 24.6 | - |
| | Synthetic hydrocarbon oil 3) | - | - | - | - |
| | Synthetic hydrocarbon oil 4) | - | - | - | 85 |
| | Ester oil 5) | 16 | 16.5 | 16.6 | - |
| | Ester oil 6) | - | - | - | - |
| Thickener (mass%) | Amine: octylamine | 7.1 | 6.2 | 6 | 5.3 |
| | Amine: cyclohexylamine | 2.7 | 2.4 | 2.3 | 2 |
| | Diisocyanate: MDI | 10.2 | 9 | 8.7 | 7.7 |

(continued)

| | | Test Example | | | |
|---|---|---|---|---|---|
| | | B17 | B18 | B19 | B20 |
| Antirust agent (mass%) | Sorbitan monooleate 7) | 0.5 | 0.5 | - | 0.5 |
| | Sorbitan trioleate 8) | | | | |
| | Zinc sulfonate 9) | 0.5 | 0.5 | - | 0.5 |
| Base oil viscosity (mm²/s) at 40°C | | 9 | 9 | 9 | 47 |
| Worked penetration (60-stroke) | | 200 | 300 | 280 | 240 |
| Seal torque test (N·m) | | 0.13 | 0. 11 | 0.10 | 0.22 |
| Water invasion amount (g) | | × | × | ◎ | ◎ |
| Rust generation rate (%) | | ◎ | ◎ | × | ◎ |

As shown in Tables 4 and 5, the grease of each of the test examples B1 to B16 that contains the base oil, the thickener and the antirust agent, wherein the base oil has the kinematic viscosity at 40 °C of 6-45 mm²/s and the worked penetration of the grease is 220-280, shows excellent result in each test.

According to the results shown in Tables 4 to 6, as the kinematic viscosity at 40 °C of the base oil decreases within a range of 6-45 mm²/s, lower torque is realized in the torque seal test (see the test examples B1, and B14 to B16). In the test example B20 (the kinematic viscosity of 47 mm²/s), the torque is large.

It is found that the worked penetration of the grease and compound rate of the antirust agent affect, in particular, the result of the water invasion amount (water resistance) . In each of the test examples B17 and B18 of which the worked penetration is out of the range of 220-280, the water invasion amount is large. In the test example B18 (the worked penetration of 300), since the worked penetration is large and the grease is soft, the grease is leaked from around the lip and thus the sealing performance is deteriorated. In the test example B17 (the worked penetration of 200), since the grease is hard and the flowability thereof is poor, a gap is easily generated and thus the sealing performance is deteriorated.

Further, as the compound rate of the antirust agent becomes large, the water invasion amount increases (see the test examples B4, B5, B9 and B10). It is found that the antirust agent is effective for antirust performance, while the antirust agent is possibly disadvantageous for the sealing performance of the grease against the invasion of water. It is assumed that as the compound rate of the antirust agent becomes large, the hydrophilicity of the grease easily gets high and the shape of the grease in the vicinity of the lip is difficult to be kept.

Relating to the rust generation rate, the antirust performance is improved by employing a combination of the ester-based antirust agent and the sulfonate-based antirust agent, compared to a configuration that employs only one of the ester-based antirust agent and the sulfonate-based antirust agent (see the test examples B3 to B8).

In the test example B, according to the results shown in Tables 4 to 6, by combining the appropriate worked penetration, the appropriate viscosity of the base oil, and the appropriate antirust agent (in particular, the combination of the ester-based antirust agent and the sulfonate-based antirust agent), channeling performance is secured, low torque is realized, and superior water resistance and superior antirust performance can be obtained. Further, in this test, a combination of a specified base oil (the synthetic hydrocarbon oil only, or the mixed oil of the synthetic hydrocarbon oil and the ester oil) and a specified thickener (the aliphatic and alicyclic diurea compound) is employed because the worked penetration is easily set in an appropriate numerical range while employing the base oil having low viscosity.

Test Example C

The grease having each composition shown in Tables 7 and 8 was produced. In each of Tables 7 and 8, mass% of each of the base oil, the thickener, and the antioxidant shows the content rate relative to the base grease (the total of the base oil and the thickener) . The remarks 1) to 4) below Table 7 are also applied to Table 8.

Each grease was produced similar to the test example A as shown in Fig. 6(a).

The worked penetration (JIS K 2220) of the obtained grease was measured.

The obtained grease was applied by total 0.6 g, to respective one side surfaces of the distal end portions of three seal lips of the seal member (φ 60-70 mm) formed of nitrile rubber. The seal member was mounted to a component serving as a hub outer ring, and a slinger formed of SUS430 was mounted to a component serving as a hub inner ring. And then, the components were assembled such that the seal lip and the slinger are in contact with each other.

Torque fluctuation test 1

The component serving as the hub inner ring was rotated for 30 minutes at rotational speed of 1,000 minute$^{-1}$ in a room temperature atmosphere. The seal member is in sliding contact with the slinger (a mating material) formed of SUS430. The torque (N·m) was measured while the seal lip is being in sliding contact with the slinger, and a difference between the maximum torque and the minimum torque in the last five minutes was calculated. The difference (the torque fluctuation) of less than 0.01 N·m is determined as ⊚, the difference of 0.01 N·m or more and less than 0.02 N·m is determined as o, and the difference of 0.02 N·m or more is determined as ×. The determination is also shown in Tables 7 and 8.

Torque fluctuation test 2

The component serving as the hub inner ring was rotated for 15 minutes at rotational speed of 50 minute$^{-1}$ in a room temperature atmosphere. The seal member is in sliding contact with the slinger (a mating material) formed of SUS430. The torque (N·m) was measured while the seal lip is being in sliding contact with the slinger, and a difference between the maximum torque and the minimum torque in the last five minutes was calculated. The difference (the torque fluctuation) of less than 0.01 N·m is determined as ⊚, the difference of 0.01 N·m or more and less than 0.02 N·m is determined as o, and the difference of 0.02 N·m or more is determined as ×. The determination is also shown in Tables 7 and 8.

High temperature resistance test

The high temperature resistance of each grease was evaluated based on the oxidation induction time. The oxidation induction time is measured by the pressure differential scanning calorimetry (PDSC). The PDSC is a measuring method that performs the differential scanning calorimetry under a pressured environment. The oxidation induction time is measured in the PDSC as the time that the oxidation starts after the temperature of the specimen reaches the specified temperature. The time (the oxidation induction time) to the oxidation exothermic peak from the timing that the specimen temperature reaches 220 °C in an oxygen atmosphere pressured by 3.5 MPa at the test temperature of 220 °C, was measured using a specimen grease of 3 mg. The oxidation induction time of 30 minutes or more is determined as ⊚, the oxidation induction time of 10 minutes or more and less than 30 minutes is determined as o, and the oxidation induction time of less than 10 minutes is determined as ×. The determination is also shown in Tables 7 and 8.

Low temperature resistance test

The low temperature resistance of each grease was evaluated based on the storage modulus. A parallel plate rheometer was used in this test. The grease was put on a lower plate of φ 25 mm and interposed from upper and lower sides by the lower plate and an upper plate of φ 25 mm, and a gap between the plates was set to 1 mm. The storage modulus of the grease to which a strain of 0.001 is applied at -40 °C and frequency of 1 Hz was measured. The storage modules of less than 200 kPa is determined as ⊚, the storage modulus of 200 kPa or more and less than 250 kPa is determined as o, and the storage modulus of 250 kPa or more is determined as ×. The determination is also shown in Tables 7 and 8.

Table 7

|  |  | Test Example | | | | | | |
|---|---|---|---|---|---|---|---|---|
|  |  | C1 | C2 | C3 | C4 | C5 | C6 | C7 |
| Base oil (mass%) | Synthetic hydrocarbon oil 1) | 41.4 | 41.4 | 41.4 | 41.4 | 40.8 | 41.1 | 41.5 |
|  | Synthetic hydrocarbon oil 2) | 24.3 | 24.3 | 24.3 | 24.3 | 24 | 24.1 | 24.4 |
|  | Ester oil 3) | 16.4 | 16.4 | 16.4 | 16.4 | 16.2 | 16.3 | 16.5 |
| Thickener (mass%) | Amine: octylamine | 6.3 | 6.3 | 6.3 | 6.3 | 6.7 | 6.5 | 6.2 |
|  | Amine: cyclohexylamine | 2.4 | 2.4 | 2.4 | 2.4 | 2.6 | 2.5 | 2.4 |
|  | Diisocyanate: MDI | 9.2 | 9.2 | 9.2 | 9.2 | 9.7 | 9.5 | 9 |
| Antioxidant (mass%) | Octyl diphenyl amine 4) | 0.5 | 0.1 | 1 | 2 | 0.5 | 0.5 | 0.5 |
| Base oil viscosity (mm$^2$/s) at 40°C | | 9 | 9 | 9 | 9 | 9 | 9 | 9 |

(continued)

| | Test Example | | | | | | |
|---|---|---|---|---|---|---|---|
| | C1 | C2 | C3 | C4 | C5 | C6 | C7 |
| Worked penetration (60-stroke) | 280 | 260 | 280 | 300 | 240 | 260 | 300 |
| Torque fluctuation (1,000 minute$^{-1}$) (N·m) | ◎ | ◎ | ◎ | ◎ | ○ | ◎ | ◎ |
| Torque fluctuation (50 minute$^{-1}$) (N·m) | ◎ | ◎ | ◎ | ○ | ◎ | ◎ | ○ |
| Oxidation induction time (minute) | ◎ | ○ | ◎ | ◎ | ◎ | ◎ | ◎ |
| Storage modulus (kPa) | ◎ | ◎ | ◎ | ◎ | ○ | ◎ | ◎ |

1) 5 mm$^2$/s at 40 °C (Shinfluid 201 produced by NIPPON STEEL Chemical & Material Co., Ltd.)

2) 17 mm$^2$/s at 40 °C (Shinfluid 401 produced by NIPPON STEEL Chemical & Material Co., Ltd.)

3) 16 mm$^2$/s at 40 °C (Kaolube 162 produced by Kao Corporation) 4) Nocrac AD-F produced by Ouchi Shinko Chemical Industrials CO.,LTD.

Table 8

| | | Test Example | | | | | | |
|---|---|---|---|---|---|---|---|---|
| | | C8 | C9 | C10 | C11 | C12 | C13 | C14 |
| Base oil (mass%) | Synthetic hydrocarbon oil 1) | 41.3 | 42.8 | 43.5 | 41.8 | 41.4 | 40.6 | 41.8 |
| | Synthetic hydrocarbon oil 2) | 24.3 | 25.2 | 37 | 24.6 | 24.3 | 23.8 | 24.6 |
| | Ester oil 3) | 16.4 | 17 | - | 16.6 | 16.4 | 16.1 | 16.6 |
| Thickener (mass%) | Amine: octylamine | 4.9 | 2.8 | 6.9 | 6 | 6.3 | 6.9 | 6 |
| | Amine: cyclohexylamine | 3.7 | 4.2 | 2.6 | 2.3 | 2.4 | 2.6 | 2.3 |
| | Diisocyanate: MDI | 9.4 | 8 | 10 | 8.7 | 9.2 | 10 | 8.7 |
| Antioxidant (mass%) | Octyl diphenyl amine 4) | 0.5 | 0.5 | 0.5 | - | 3 | 0.5 | 0.5 |
| Base oil viscosity (mm$^2$/s) at 40°C | | 9 | 9 | 9 | 9 | 9 | 9 | 9 |
| Worked penetration (60-stroke) | | 280 | 280 | 260 | 280 | 320 | 220 | 320 |
| Torque fluctuation (1,000 minute$^{-1}$) (N·m) | | ◎ | ◎ | ◎ | ◎ | ◎ | × | ◎ |
| Torque fluctuation (50 minute$^{-1}$) (N·m) | | ◎ | ◎ | ◎ | ◎ | × | ◎ | × |
| Oxidation induction time (minute) | | ◎ | ◎ | ◎ | × | ◎ | ◎ | ◎ |
| Storage modulus (kPa) | | ◎ | ◎ | ◎ | ◎ | ◎ | × | ◎ |

As shown in Tables 7 and 8, the grease of each of the test examples C1 to C10 that contains the base oil, the thickener and the antioxidant of which the compound rate is 0.1mass% or more and less than 3 mass% relative to the whole of the base grease, wherein the worked penetration of the grease is 240-300, shows excellent result in each test.

It is found that the worked penetration of the grease affects, in particular, the result of the torque fluctuation test. For example, according to the test examples C5, C6 and C13, as the worked penetration becomes small, the torque fluctuation at the rotational speed of 1,000 minute$^{-1}$ becomes large. According to the test examples C1, C4, C7, C12 and C14, as the worked penetration becomes large, the torque fluctuation at the rotational speed of 50 minute$^{-1}$ becomes large. In this manner, in a case in which the worked penetration is in a range of 240-300, the torque fluctuation can be favorably suppressed at any rotational speed in the low rotational speed condition.

More favorable high temperature resistance can be obtained by compounding 0.5 mass% or more of the antioxidant relative to the whole of the base grease. Further, as the worked penetration becomes large, the low temperature resistance becomes favorable, and more favorable low temperature resistance can be obtained at the worked penetration of 260 or more.

In the test example C, according to the results shown in Tables 7 and 8, by combining the appropriate worked

EP 4 317 374 A1

penetration and the appropriate antioxidant, low torque is realized, and superior torque stability, superior high temperature resistance and superior low temperature resistance can be obtained. Further, in this test, a combination of a specified base oil (the synthetic hydrocarbon oil only, or the mixed oil of the synthetic hydrocarbon oil and the ester oil) and a specified thickener (the aliphatic and alicyclic diurea compound) is employed because the worked penetration is easily set in an appropriate numerical range while employing the base oil having low viscosity.

INDUSTRIAL APPLICABILITY

The sealed rolling bearing of the present invention is capable of achieving both of low torque performance and high sealing performance. Further, the sealed rolling bearing of the present invention is capable of achieving both of superior water resistance and superior antirust performance, and achieving both of torque stability and high and low temperature resistance. Consequently, the sealed rolling bearing of the present invention can be widely used as a sealed rolling bearing.

REFERENCE SIGNS LIST

| 1: | hub bearing (sealed rolling bearing) |
| 2: | outer member |
| 3: | inner member |
| 4: | hub ring |
| 5: | inner ring |
| 6: | serration |
| 7: | rolling element |
| 8: | cage |
| 9: | bearing space |
| 11: | bearing sealing device |
| 12: | core metal |
| 13: | seal member |
| 14: | seal ring |
| 15: | slinger |
| 16: | bearing sealing device |
| 17: | core metal |
| 18: | seal member |
| 19: | sliding contact surface |
| 21: | rolling bearing (sealed rolling bearing) |
| 22: | inner ring |
| 23: | outer ring |
| 24: | rolling element |
| 25: | cage |
| 26: | grease composition |
| 27: | bearing sealing device |
| 28: | core metal |
| 29: | seal member |
| G: | grease |

**Claims**

1.  A sealed rolling bearing comprising:

    a seal member that seals a bearing space;
    a fixed side member; and
    a rotating side member,
    wherein:

        the seal member is fixed to the fixed side member and is configured to be in sliding contact with the rotating side member,
the seal member has a seal lip that is in sliding contact with the rotating side member,
grease is applied to at least one of a sliding contact surface of the seal lip and a sliding contact surface of the rotating side member with which the seal lip is sliding contact,
the grease contains a base oil and a thickener,
the kinematic viscosity at 40 °C of the base oil is 6-45 mm$^2$/s, and
the worked penetration of the grease measured based on JIS K 2220 is 220-320.

2. The sealed rolling bearing as defined in claim 1, wherein:

the thickener is a urea compound or a complex lithium soap,
the urea compound is obtained by causing a polyisocyanate component and a monoamine component to react with each other, and
the monoamine component is at least one of aliphatic monoamine and alicyclic monoamine.

3. The sealed rolling bearing as defined in claim 1, wherein the base oil is at least one of synthetic hydrocarbon oil, ester oil, and ether oil.

4. The sealed rolling bearing as defined in claim 1, wherein the base oil is formed of only synthetic hydrocarbon oil or a mixed oil of the synthetic hydrocarbon oil and ester oil.

5. The sealed rolling bearing as defined in claim 1, wherein:

the kinematic viscosity at 40 °C of the base oil is 6-20 mm$^2$/s, and
the worked penetration of the grease oil is 220-270.

6. The sealed rolling bearing as defined in claim 1, wherein:

the grease contains an antirust agent, and
the worked penetration of the grease is 220-280.

7. The sealed rolling bearing as defined in claim 6, wherein the antirust agent is at least one of an ester-based antirust agent and a sulfonate-based antirust agent.

8. The sealed rolling bearing as defined in claim 6, wherein:

the grease contains an ester-based antirust agent and a sulfonate-based antirust agent as the antirust agent, and
the grease contains 0.5mass% or more and less than 1.5 mass% of the antirust agent relative to the total amount of the base oil and the thickener.

9. The sealed rolling bearing as defined in claim 1, wherein:

the grease contains an antioxidant,
the grease contains 0.1 mass% or more and less than 3 mass% of the antioxidant relative to the total amount of the base oil and the thickener, and
the worked penetration of the grease is 240-300.

10. The sealed rolling bearing as defined in claim 9, wherein the antioxidant is an amine-based antioxidant.

11. The sealed rolling bearing as defined in claim 1, wherein:

the seal member is formed of nitrile rubber,
the seal lip includes a first seal lip, a second seal lip and a third seal lip in this order from an inner side of the bearing space, and
the grease is applied to the sliding contact surface of each of the seal lips.

12. The sealed rolling bearing as defined in claim 1, wherein the sealed rolling bearing is configured as a bearing that rotatably supports an axle.

**13.** A sealed rolling bearing comprising:

a seal member that seals a bearing space;
a fixed side member; and
a rotating side member,
wherein:

the seal member is fixed to the fixed side member and is configured to be in sliding contact with the rotating side member,
the seal member has a seal lip that is in sliding contact with the rotating side member,
grease is applied to at least one of a sliding contact surface of the seal lip and a sliding contact surface of the rotating side member with which the seal lip is sliding contact,
the grease contains a base oil, a thickener and an antioxidant,
the grease contains 0.1 mass% or more and less than 3 mass% of the antioxidant relative to the total amount of the base oil and the thickener, and
the worked penetration of the grease measured based on JIS K 2220 is 240-300.

Fig.1

Fig.2

Fig.3

Fig.4

Fig.5

Fig.6

**(a)**

oil phase B

produced grease

oil phase A

100℃×0.5h    130℃×1h    r.t.

**(b)**

100μm

# INTERNATIONAL SEARCH REPORT

| International application No. |
| --- |
| **PCT/JP2022/014996** |

## A. CLASSIFICATION OF SUBJECT MATTER

*C10M 169/02*(2006.01)i; *C10N 10/04*(2006.01)n; *C10N 30/00*(2006.01)n; *C10N 30/06*(2006.01)n; *C10N 30/08*(2006.01)n; *C10N 30/12*(2006.01)n; *C10N 40/02*(2006.01)n; *C10N 50/10*(2006.01)n; *F16C 19/18*(2006.01)i; *F16C 33/78*(2006.01)i; *C10M 105/32*(2006.01)i; *C10M 107/02*(2006.01)i; *C10M 107/34*(2006.01)i; *C10M 115/08*(2006.01)i; *C10M 117/00*(2006.01)i; *C10M 133/12*(2006.01)i; *F16J 15/3204*(2016.01)i; *F16J 15/3232*(2016.01)i; *F16J 15/324*(2016.01)i; *B60B 35/14*(2006.01)i; *B60B 35/18*(2006.01)i

FI: F16C33/78 D; F16C33/78 Z; F16C19/18; F16J15/3232 201; F16J15/324; C10M169/02; C10M115/08; C10M117/00; C10M107/02; C10M105/32; C10M107/34; B60B35/14 V; B60B35/18 B; F16J15/3204 201; C10M133/12; C10N30:00 C; C10N10:04; C10N30:12; C10N30:08; C10N40:02; C10N30:06; C10N50:10

According to International Patent Classification (IPC) or to both national classification and IPC

## B. FIELDS SEARCHED

Minimum documentation searched (classification system followed by classification symbols)

C10M169/02; C10N10/04; C10N30/00; C10N30/06; C10N30/08; C10N30/12; C10N40/02; C10N50/10; F16C19/18; F16C33/78; C10M105/32; C10M107/02; C10M107/34; C10M115/08; C10M117/00; C10M133/12; F16J15/3204; F16J15/3232; F16J15/324; B60B35/14; B60B35/18

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
| --- | --- | --- |
| X | JP 2019-39470 A (NTN CORPORATION) 14 March 2019 (2019-03-14) paragraphs [0006], [0014]-[0041], fig. 1 | 1-13 |
| A | JP 2020-105462 A (NTN CORPORATION) 09 July 2020 (2020-07-09) | 1-13 |
| A | JP 2019-14824 A (NTN CORPORATION) 31 January 2019 (2019-01-31) | 1-13 |
| A | JP 2015-21566 A (NTN CORPORATION) 02 February 2015 (2015-02-02) | 1-13 |
| A | JP 2010-59369 A (NTN CORPORATION) 18 March 2010 (2010-03-18) | 1-13 |
| A | WO 2008/105377 A1 (NTN CORPORATION) 04 September 2008 (2008-09-04) | 1-13 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **07 June 2022** | **14 June 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/014996**

| Patent document cited in search report | | | Publication date (day/month/year) | Patent family member(s) | | | Publication date (day/month/year) |
|---|---|---|---|---|---|---|---|
| JP | 2019-39470 | A | 14 March 2019 | WO | 2019/039535 | A1 | |
| JP | 2020-105462 | A | 09 July 2020 | (Family: none) | | | |
| JP | 2019-14824 | A | 31 January 2019 | WO | 2019/009058 | A1 | |
| JP | 2015-21566 | A | 02 February 2015 | US | 2016/0160923 | A1 | |
| | | | | WO | 2015/008856 | A1 | |
| | | | | EP | 3023657 | A1 | |
| | | | | CN | 105408647 | A | |
| JP | 2010-59369 | A | 18 March 2010 | US | 2011/0136578 | A1 | |
| | | | | WO | 2010/027019 | A1 | |
| | | | | CN | 102144021 | A | |
| WO | 2008/105377 | A1 | 04 September 2008 | JP | 2008-286373 | A | |
| | | | | JP | 2009-19750 | A | |
| | | | | JP | 2009-36222 | A | |
| | | | | JP | 2009-121532 | A | |
| | | | | JP | 2008-239962 | A | |
| | | | | JP | 2014-129886 | A | |
| | | | | CN | 101622333 | A | |
| | | | | KR | 10-2009-0123919 | A | |
| | | | | KR | 10-2015-0001850 | A | |

Form PCT/ISA/210 (patent family annex) (January 2015)

**EP 4 317 374 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5110843 B
- JP 4475055 B
- JP 4997532 B